# EUROPÄISCHE PATENTANMELDUNG

(11) **EP 1 094 237 A1**
(43) Veröffentlichungstag der Anmeldung: **25.04.2001**
(21) Anmeldenummer: 00122245.4
(22) Anmeldetag: 18.10.2000
(51) Int. Cl.: F16F 1/373, F16F 9/58

(54) **Endanschlagsbegrenzer für Kfz-Stossdämpfer**

(30) Priorität: 21.10.1999 DE 29918474 U
(71) Anmelder: Colour Tuning GmbH, 95119 Naila (DE)
(72) Erfinder: Colour Tuning GmbH, 95119 Naila (DE)
(74) Vertreter: Lange, Heinke

(57) **Zusammenfassung**

Die Erfindung betrifft einen Endanschlagsbegrenzer für einen KfZ-Stoßdämpfer, der den Federweg des Fahrzeuges begrenzen soll, wenn nachträglich z.B. Breitreifen an das Fahrzeug montiert werden. Der Endanschlagsbegrenzer für KfZ-Stoßdämpfer gemäß Erfindung ist dadurch gekennzeichnet, dass ein aus einem elastischen Kunststoff bestehender Ring vorhanden ist, der eine Mittelbohrung zur Aufnahme der Kolbenstange eines Stoßdämpfers und eine keilförmige Aussparung aufweist, über die der Ring auf die Kolbenstange aufschiebbar ist.

## Beschreibung

Die Erfindung betrifft einen Endanschlagsbegrenzer für einen KfZ-Stoßdämpfer, der den Federweg des Fahrzeuges begrenzen soll, wenn nachträglich z.B. Breitreifen an das Fahrzeug montiert werden.

Es ist bekannt, Endanschlagsbegrenzer, auch Federwegbegrenzer genannt, zu fertigen, die von oben über die Kolbenstange auf das Stoßdämpfergehäuse aufgesetzt werden. Der Einbau solcher Endanschlagsbegrenzer wird unter anderem notwendig, wenn durch den Anbau von Breitreifen der Federweg des Fahrwerkes dahingehend begrenzt werden muss, dass die Reifen beim Einfedern des Fahrzeuges nicht an die Karosserie angeschlagen werden können.

Der Erfindung liegt die Aufgabe zugrunde, den Zeitaufwand zu verringern, der für den Einbau von Breitreifen erforderlich ist. Es soll insbesondere der Zeitaufwand dahingehend verringert werden, dass bei jedem Ein- bzw. Ausbau des Endanschlagsbegrenzers nicht mehr wie bisher das komplette Fahrwerk oder Teile des Fahrwerkes aus- und wieder eingebaut werden müssen.

Diese Aufgabe wird durch den Patentanspruch gelöst.

Der Endanschlagsbegrenzer für KfZ-Stoßdämpfer gemäß Erfindung ist dadurch gekennzeichnet, dass ein aus einem elastischen Kunststoff bestehender Ring vorhanden ist, der Ring eine Mittelbohrung zur Aufnahme der Kolbenstange eines Stoßdämpfers besitzt, und der Ring eine keilförmige Aussparung aufweist, über die der Ring auf die Kolbenstange aufschiebbar ist.

Die Aussparung des elastischen Ringes wird über die Kolbenstange geschoben und begrenzt dadurch den Fegerweg des Stoßdämpfers. Die mit der Erfindung erzielbaren Vorteile bestehen insbesondere darin, dass keine Bauteile des Fahrwerkes ausgebaut werden müssen, um den Endanschlagsbegrenzer an den Stoßdämpfer ein- oder auszubauen. Auch der Einbau mehrerer Endanschlagsbegrenzer übereinander an einem Stoßdämpfer ist technisch völlig unproblematisch. Der effektive Federweg der Stoßdämpfer kann auf diese Weise genau eingestellt werden.

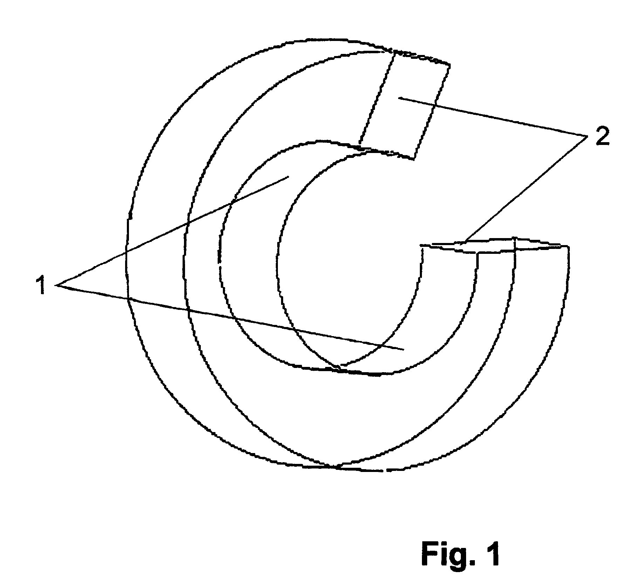

Die Figur 1 zeigt den erfinderischen Endanschlagsbegrenzer.

Der Endanschlagsbegrenzer besteht aus einem Ring aus einem elastischen Kunststoff mit einer Mittelbohrung 1 und einer keilförmigen Aussparung 2. Die Mittelbohrung 1 dient zur Aufnahme der Kolbenstange des Stoßdämpfers und die keilförmige Aussparung 2 zum Überstreifen des Endanschlagsbegrenzers auf die Kolbenstange.

## Patentansprüche

1. Endanschlagsbegrenzer für KfZ-Stoßdämpfer, dadurch gekennzeichnet, dass ein aus einem elastischen Kunststoff bestehender Ring vorhanden ist, der eine Mittelbohrung zur Aufnahme der Kolbenstange eines Stoßdämpfers und eine keilförmige Aussparung aufweist, über die der Ring auf die Kolbenstange aufschiebbar ist.
